# EUROPEAN PATENT SPECIFICATION

(11) **EP 3 130 117 B1**
(45) Date of publication and mention of the grant of the patent: **21.08.2019**
(21) Application number: 14888750.8
(22) Date of filing: 10.04.2014
(51) Int. Cl.: H04L 12/903, H04B 7/185, H04W 48/18, H04L 12/64, H04L 12/859, H04L 12/813, H04L 29/06, G08G 5/00, H04W 80/06, H04L 29/08

(54) **SYSTEMS AND METHODS FOR DYNAMIC TRANSPORT PROTOCOL LAYER MANAGEMENT FOR AVIONICS SYSTEM**
SYSTEME UND VERFAHREN FÜR DYNAMISCHES TRANSPORTPROTOKOLLSCHICHTMANAGEMENT FÜR AVIONIKSYSTEME
SYSTÈMES ET PROCÉDÉS DE GESTION DE LA COUCHE DE PROTOCOLE DE TRANSPORT DYNAMIQUE POUR SYSTÈME AVIONIQUE

(43) Date of publication of application: 15.02.2017
(73) Proprietor: Honeywell International Inc., Morris Plains, NJ 07950 (US)
(72) Inventor: TOTH, Louis T., Morristown, New Jersey 07962-2245 (US); OLIVE, Michael L., Morristown, New Jersey 07962-2245 (US); SUN, Jian, Morristown, New Jersey 07962-2245 (US); ZOU, Likun, Morristown, New Jersey 07962-2245 (US)
(74) Representative: Houghton, Mark Phillip
(86) International application number: PCT/CN2014/075054
(87) International publication number: WO 2015/154279

(56) References cited:
- EP-A1- 2 378 676
- WO-A1-02/103931
- CN-A- 101 425 977
- US-A1- 2005 286 452
- US-A1- 2007 291 767
- US-A1- 2008 025 318
- Icao: "ICAO Aeronautical Telecommunication Network (ATN) Manual for the ATN using IPS Standards and Protocols (Doc 9896) - Draft 19", , 26 April 2011 (2011-04-26), XP055418065, Retrieved from the Internet: URL:https://www.icao.int/safety/acp/ACPWGF /ACP-WG-I-14/IP 8 DOC9896_rev_19_ Directory Services Added.pdf [retrieved on 2017-10-23]

## Description

### BACKGROUND

Modern aircraft are equipped with communications equipment that support multiple datalink options for establishing communications between on-board applications and ground based applications. Examples of commonly available datalinks include, but are not limited to, satellite communication (SATCOM) datalinks, VHF radio communication datalinks, Wi-Fi datalinks and cellular communication datalinks. Typically, acommunications manager on-board an aircraft maintains quality and availability information for various datalinks and has the ability to automatically select adatalink for establishing air-ground communication based on predefined preference profiles. The concept of IP-based policy-based communications management and datalink management is based on the AEEC specification 839 on Manager of Air/Ground Interface Communications (MAGIC). A growing volume of air-ground communications is formatted based on the Internet Protocol Suite (IPS) of standards. In fact, there are plans in the airline industry for migrating all air-ground communications that carry Air Traffic Management (ATM) services from existing ATN communications based on ISO/OSI standards to ATN communications based on IPS standards. One reason for this planned transition is that IPS permits use of new broadband Internet Protocol (IP)-based air-ground datalinks and facilitates standardized straight-forward connectivity with IP-based ground networks. That is, aircraft applications will communicate with ground-based applications using broadband air-ground datalinks implemented with standard IPS protocols.

The International Civil Aviation Organization has issued standard ICAO 9896, which specifies that the IPS standard communications stack should be used to implement IP air-ground datalinks. In ICAO 9896, two types of transport protocols are specified: the Transport Control Protocol (TCP) and User Datagram Protocol (UDP). TCP provides a very reliable transport protocol, but its performance is susceptible to latency affects such as those inherent in certain datalinks (for example, SATCOM datalinks). UDP is a connectionless transport and does not suffer performance problems due to latency, but at the cost of reliability. For example, UDP does not provide for reliability capabilities such as acknowledgments, timeouts, retransmissions, packet-ordering and flow control. The decision as to which of these two transport protocols is used by an application is made during the software development stage.

One problem with using IPS for air-ground communications is that characteristics of the datalink selected by the on-board communication manager can adversely affect the performance of TCP and UDP communications in different ways. For example, the on-board communications manager may selects a SATCOM datalink when, for example, other datalinks are either unavailable or are experiencing temporary quality issues. SATCOM, while reliable, is known to have latency issues. Therefore an application utilizing TCP may have its air-ground communications spuriously interrupted by latency caused time-out events. This can lead to driving up the costs of completing that communication due to the resulting necessity of package re-transmissions.

For the reasons stated above and for other reasons stated below which will become apparent to those skilled in the art upon reading and understanding the specification, there is a need in the art for improved systems and methods for dynamic transport protocol layer management for avionics systems.

Reference is made to EP2378676A1, which discloses systems and methods for integration of IP-based data link management in existing avionics architectures. In one arrangement, a communications management unit comprises: a legacy router providing access to a first set of air-ground data links; an internet protocol router providing access to a second set of air-ground data links; an applications and routing policy that provides criteria for selecting of a data link from one of the first set of air-ground data links or the second set of air-ground data links; and a data link manager that selects the data link from either the first set of air-ground data links and second sets of air-ground data links based on information provided by the applications and routing policy and controls the legacy router and the internet protocol router to route communication messages via the selected data link. US2005/286452 discloses a communications channel selection device aimed at solving the problems associated with selecting a preferred channel for two-way communication between an aircraft and the ground over TCP/IP packet-based networks. The device provides a means whereby policies for the selection of a preferred datalink are associated with the communications from aircraft-based applications so that communications are effected over the preferred channel according to a pre-defined set of policies. "ICAO Aeronautical Telecommunication Network (ATN) Manual for the ATN using IPS Standards and Protocols" (26 April 2011) discloses data communications protocols and services to be used for implementing the International Civil Aviation Organization (ICAO) Aeronautical Telecommunications Network (ATN) using the Internet Protocol Suite (IPS).

### SUMMARY

The present invention provides for methods and systems for dynamic transport protocol layer management for avionics systems as claimed in the accompanying claims.

### DRAWINGS

Embodiments of the present invention can be more easily understood and further advantages and uses thereof more readily apparent, when considered in view of the description of the preferred embodiments and the following figures in which:
Figure 1 is a block diagram illustrating a system of one embodiment of the present disclosure;
Figure 2 is a block diagram illustrating a system of one embodiment of the present disclosure;
Figure 3 is a block diagram illustrating a system of one embodiment of the present disclosure;
Figure 4 is a flow chart illustrating a process of one embodiment of the present disclosure.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Embodiments of the present disclosure address the aforementioned problems with systems and methods that dynamically select between using TCP and UDP for IPS communications over datalinks. The transport layer protocol is selected by an on-board IP-Based Communications Manager (ICM) and parameters may be configured to adapt the transport layer to meet the quality of service (QoS) needs of the aircraft application utilizing the datalink and the QoS capability of the air-ground datalink selected to provide the air-ground communications services for the aircraft application.

As mentioned above, whereas TCP is connection-oriented, UDP is connectionless. UDP is a lighter weight protocol than TCP because it does not have the reliability mechanisms found in TCP. UDP however may still be a better alternative than TCP for certain applications, datalinks and QoS needs where an application layer above UDP can take on the responsibility of reliable communications, packet-ordering and flow control to the extent needed. The application layer over UDP can have the flexibility of being configurable to adapt to the inherent performance of datalinks and still provide the QoS needed by the aircraft applications. For example, factors such as bandwidth and coverage may make SATCOM the preferred or only datalink choice for air-ground communications when an aircraft is in a particular airspace. But, TCP performance degradations due to latency may prevent TCP over SATCOM from meeting the QoS needs of the application. As described below, UDP can be selected and configured so that in these cases an adequate level of transport reliability is provided. If TCP is still the better choice for another application, datalink and QoS, then TCP may be selected and configured appropriately for the situation. As described herein, embodiments of the present disclosure describe embodiments for dynamically selecting between TCPand UDP, and configuring the selected transport based on the QoS needs of the application and the QoS capability of the selectedair-ground datalink.

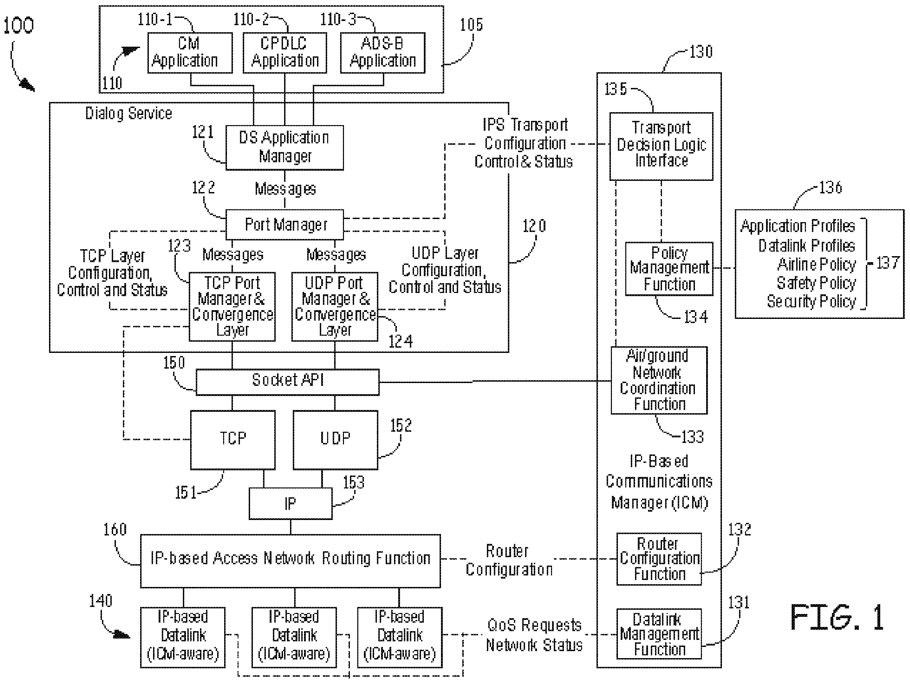

Figure 1 is a block diagram illustrating one embodiment of an on-board aircraft communication system 100 of one embodiment of the present disclosure. System 100 is drawn to meeting the air-ground communications needs of legacy air traffic management (ATM) applications (shown at 110-1, 110-2 and 110-3 and referred to collectively herein as applications 110). In the embodiment shown in Figure 1, applications 110 are executed by an avionics computer system 105 which includes at least one processor for executing the applications 110. As the term is used throughout this disclosure, "air-ground communication" refers to communications between an application executed on-board an aircraft and corresponding application at a ground station. As such, the term is intended to encompass bidirectional communications. In the embodiment shown in Figure 1, ATM applications 110 include a Context Management (CM) application 110-1, a Controller Pilot Datalink Control (CPDLC) application 110-2 and an Automatic Dependence Surveillance-Broadcast (ADS-B) application 110-3. The mention of these air traffic management applications are not intended to be limiting, but are provided as illustrative examples. In other embodiments, ATM applications 110 may include a set comprising different applications, or a greater or fewer number of applications.

Each of the ATM applications 110 are communicatively coupled to a dialog service (DS) module 120, which includes a DS Application Manager 121, an Port Manager 122, a TCP Port Manager & Convergence Layer 123, and a UDP Power Manager & Convergence Layer 124.

System 100 further comprises and IP-Based Communication Manager (ICM) 130 which is communicatively coupled to the DS module 120. ICM 130 includes a datalink management function 131, a router configuration function 132, an air-ground network coordination function 133, a policy management function 134 (which is coupled to a memory 136 that stores one or more profile and policy definitions 137) and a Transport Decision Logic and Interface 135 (which in Figure 1 communicates with the Port Manager 122 of the DS module 120).

IP Datalinks 140 represent the wireless radio communication hardware options available to system 100 for establishing air-ground communications. IP Datalinks 140 may include one or more of SATCOM, UHV and VHF radio, Wi-Fi and cellular communication datalinks. As indicated in Figure 1, one or more of IP Datalinks 140 are "ICM-aware" meaning that they comprise an interface for communicating with the ICM 130. More specifically, IP Datalinks 140 each communicate QoS and datalink network status information specific to their particular datalink with the Datalink Management Function 131. Datalink Management Function 131 in turn can determine the status (e.g., an availability and/or quality) for each of the IP Datalinks 140 and communicate with them to make requests for bandwidth allocation to support air-ground communications. That is, via the Datalink Management Function 131, ICM 130 manages the IP Datalinks 140 to obtain status and to request QoS based on current application needs and datalink availability and conditions.

The ICM 130 is the decision point for IPS transport selection and configuration as well as IP Datalink 140 selection. ICM 130 makes these decisions based on an application profile (as provided by the profile and policy definitions 137) and current QoS needs of the application requesting the air-ground communication, a datalink profile (as provided by the profile and policy definitions 137) and current availability and QoS capability of datalinks 140, and one or more other policies (as provided by the profile and policy definitions 137). The one or more policies provided by the profile and policy definitions 137 may include a policy defining an airline's preferences on datalink usage, as well as a security policy and a flight safety policy. The determination of which of the profile and policy definitions 137 are appropriate for making a particular datalink and transport protocol decision is handled by policy management function 134.

Transport Decision Logic and Interface 135 controls the Port Manager 122 to direct communications between the applications 110 and a selected port, either TCP or UDP ports. In addition to IPS transport protocol selection, Transport Decision Logic and Interface 135 further interfaces with the Port Manager 122 for status and configuration purposes.

The DS module 120 is the application layer function that supports IPS transport layer protocol selection and configuration. The Port Manager 122 controls the selection between TCP and UDP and configures the TCP and UDP protocol parameters on a port by port basis.This function manages the TCP and UDP Port Manager & Convergence Layers (123 and 124, respectively). As shown in Figure 1, the TCP and UDP Port Manager & Convergence Layers 123, 124 are coupled to and operate over a standard Socket API 150.

In operation, DS Application Manager 121 receives a communication message from one of the applications 110 and sends that message to the Port Manager 122. The Port Manager sends that message to either to the TCP Port Manager & Convergence Layer 123 or the UDP Port Manager & Convergence Layer 124. Each of the layers 123, 124 are coupled to and receive configuration, control and status information from the Port Manager 122. Therefore, depending on the transport layer protocol selected by ICM 130, either TCP Port Manager & Convergence Layer 123 or UDP Port Manager & Convergence Layer 124 will be configured to instantiate a port entity and handle communications for the application using standard function calls to Socket API 150. Socket API 150 will in turn utilize either the TCP (shown at 151) or UDP (shown at 152) underlying transport protocol layers.

A port in the context of this disclosure represents a port entity and a port number. Each port entity is instantiated to provide transport services with a transport context defined for a particular application, datalink and QoS. A transport context is defined by the selected protocol, TCP or UDP, and settings of parameters in the selected protocol. Port entity instantiation is provided by the respective TCP and UDP Port Manager & Convergence layers 123 and 124.

In one embodiment, TCP and UDP port entities use the standard Socket API 150 and TCP/UDP/IP protocols. A TCP port entity may use the standard Socket API 150 and kernel network interface to configure TCP for a particular application 110, datalink 140 and the needed QoS. In one embodiment, it uses the TCP services provided through the Socket API 150. In some embodiments, TCP Port Manager & Convergence layer 123 communicates directly with the TCP -layer 151 to configure timing and other reliability parameters. A UDP port entity may provide additional functionality to provide reliability, packet-ordering and flow control that use of the UDP layer 152 does not inherently provide. In one embodiment, a common UDP port entity class provides the configurable functionality. A port entity instantiation or object is configured for the particular application, datalink and QoS. It uses the UDP services provided through the Socket API 150. Standardized IP addressing and port numbering are also configured through the instantiated ports.

Since the transport layer handles the end-to-end delivery of information, selection and configuration of the IPS transport in the avionics requires coordination with the ground end system, such as an ATC Center or airline operations center, or with the air-ground service provider ground system, which provides the air-ground services for air traffic control and airline operations centers. In one embodiment, the air-ground network coordination function 133 also interfaces with Socket API 150 to provide coordination between the aircraft and the ground applications as to which transport layer protocol has been selected prior to initiating communication of application messages over the selected datalink 140. That is, the air-ground network coordination function 133 in the ICM 130 coordinates with a peer function in a ground system about IPS transport selection and configuration. Any currently available IP-based air-ground data and network can be used for this coordination.

After the selected transport layer protocol is applied and the message is formatted for transport over an IP network at block 153 and forwarded to IP-based Access Network Routing Function 160. IP-based Access Network Routing Function 160 is further coupled to each of the IP datalinks 140 via a respective router port. Routing tables and other routing configuration parameters are controlled by the router configuration function 132 of the ICM 130. Based on the datalink 140 selected by datalink management function 131 for carrying out an air-ground communication, router configuration function 132 configures IP-based Access Network Routing Function 160 to route messages to and from the appropriate router port associated with the datalink 140 selected to facilitate the air-ground communication for the application 110.

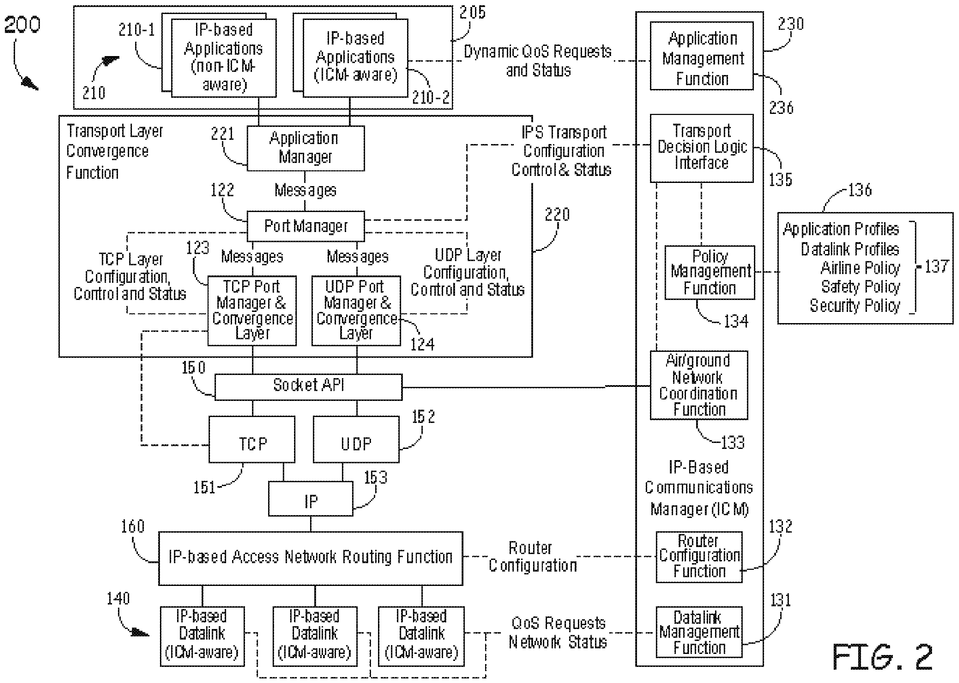

Figure 2 is a block diagram illustrating one embodiment of an on-board aircraft communication system 200 of another embodiment of the present disclosure. System 200 is substantially similar to system 100 so that similarly numbered elements in Figure 2 will provide the same functionality as described with respect to Figure 1, except as noted below. In this embodiment, system 200 is drawn to providing air-ground communications for IP-based applications 210 that communicate Aeronautical Operational Control(AOC) and Aeronautical Administrative Communication(AAC) information over IP-based datalinks 140. In the embodiment shown in Figure 2, applications 210 are executed by an avionics computer system 205 which includes at least one processor for executing the applications 210. Some of applications 210, such as shown at 210-2, are ICM-aware in that they can dynamically request QoS changes. Non-ICM-aware applications, shown at 210-1, are statically profiled only and cannot make dynamic requests.

System 200 comprises an ICM 230 which includes the same elements and functionalities described with respect to ICM 130, but further comprises an Application Management Function 236. Application Management Function 236 provides ICM 230 with an interface with the ICM-aware applications 210-2 through which these applications can dynamically request from ICM 230 changes in QoS needs (such as data throughput, for example) and ICM 230 can share with the applications 210-2 information such as the availability status of each of the datalinks 140. Through such an exchange of information, an application may, for example, determine whether it can make adjustments in the rate at which it is communicatingdata with a ground application.

System 200 also comprises a Transport Layer Convergence Function 220 which includes the same elements and functionalities described with respect to DS module 120, except that DS application manger 121 is replaced by an Application Manager 221. Application manager 221 communicates with IP-based applications 210 and facilitates the transport of IP message traffic between the IP-based applications 210 and the TCP Port Manager & Convergence Layer 123 and the UDP Power Manger & Convergence Layer 124.

In the same manner described in Figure 1, the Port Manager 122 controls the selection between TCP and UDP and configures the TCP and UDP protocol parameters on a port by port basis. This function manages the TCP and UDP Port Manager & Convergence Layers (123 and 124, respectively).

The TCP and UDP Port Manager & Convergence Layers 123, 124 are coupled to and operate over a standard Socket API 150. In operation, Application Manager 121 receives a communication message from one of the applications 210 and sends that message to the Port Manager 122. The Port Manager sends that message to either the TCP Port Manager & Convergence Layer 123 or the UDP Port Manager & Convergence Layer 124. Each of the layers 123, 124 are coupled to and receive configuration and control information from the Port Manager 122 and send status information to the Port Manager 122. Depending on the transport layer protocol selected by ICM 130, either TCP Port Manager & Convergence Layer 123 or UDP Port Manager & Convergence Layer 124 will be configured to instantiate a port entity and handle communications for the application using standard function calls to Socket API 150. Socket API 150 will in turn utilize either the TCP (shown at 151) or UDP (shown at 152) underlying transport protocol layers.

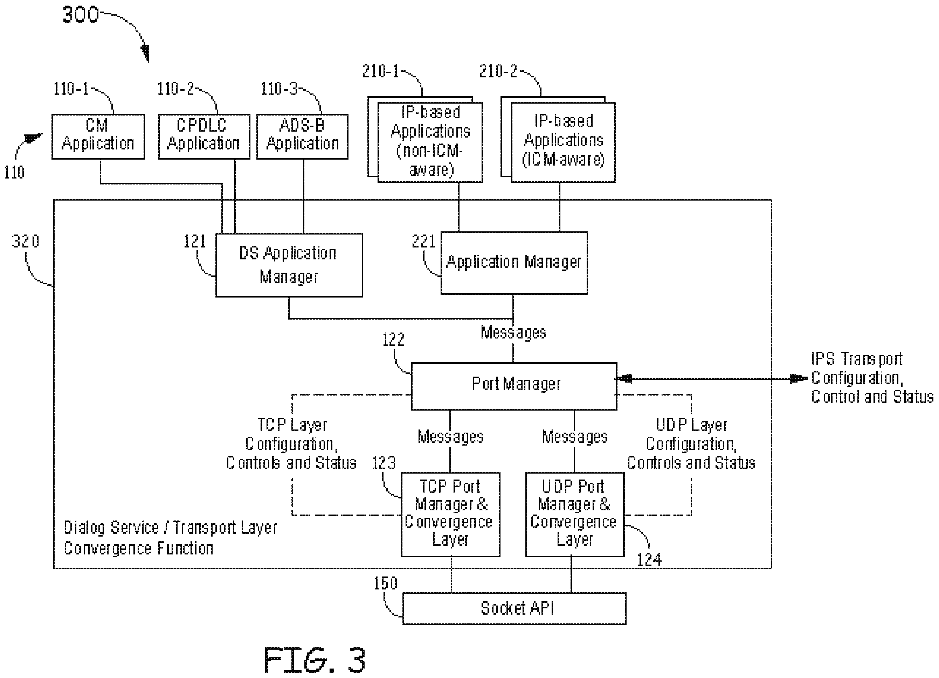

It should be appreciated that embodiments comprising a combination of system 100 and system 200 are also contemplated as within the scope of the present disclosure. For example, in one embodiment, ICM (such as ICM 230) may be coupled to a dialog service module that handles communications with ATM applications such as illustrated with system 100, and also coupled to a transport layer convergence function that handles communications with IP-based applications such as illustrated with system 200. In still other embodiments, the functions provided by dialog service module 120 and transport layer convergence function 220 are both integrated into a single DS/ transport layer convergence function such as shown generally at 320 in Figure 3.

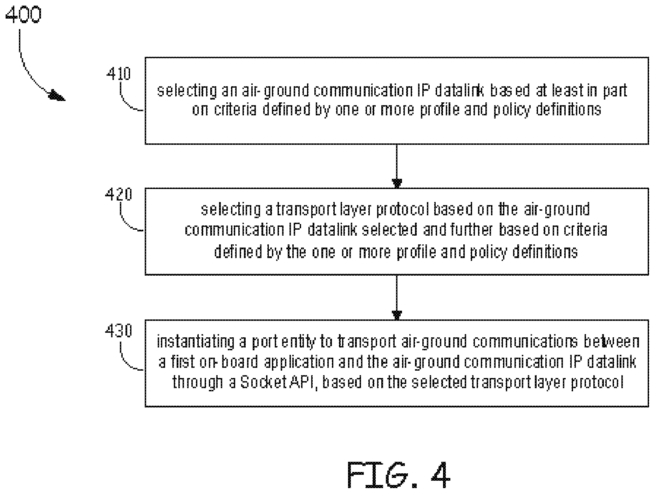

Figure 4 is a flow chart illustrating a method 400 of one embodiment of the present disclosure for providing dynamic transport protocol layer management for avionics applications. The method begins at 410 with selecting an air-ground communication IP datalink based at least in part on criteria defined by one or more profile and policy definitions. The air-ground communication IP Datalinks may comprise a datalink such as, but not limited to a SATCOM, VHF radio, a Wi-Fi or cellular communication datalink. Selection of the air-ground communication IP datalink may further be based on datalink availability, cost, data bandwidth, latency, timeliness, as well as other QoS factors.

The method proceeds to 420 with selecting a transport layer protocol based on the air-ground communication IP datalink selected and further based on criteria defined by the one or more profile and policy definitions. In one embodiment, block 420 comprises selecting between the Transport Control Protocol (TCP) and the User Datagram Protocol (UDP). This selection may be based at least in part on the QoS needs of an application requesting the air-ground communication, and the QoS capability of the selected air-ground datalink. In other embodiment, the selection of transport layer protocol is based at least in part on criteria defined one or more profile and policy definitions.The method proceeds to 430 with instantiating a port entity to transport air-ground communications between a first on-board application and the air-ground communication IP datalink through a Socket API, based on the selected transport layer protocol. As mentioned above, each port entity is instantiated to provide transport services with a transport context defined for a particular application, datalink and QoS. A transport context is defined by the selected protocol, TCP or UDP, and settings of parameters in the selected protocol. Port entity instantiation is provided by the respective TCP and UDP convergence layers.Air-ground communication messages can then be communicated between the first on-board application and a radio associated with the selected air-ground communication IP datalink. In some embodiments, the first on-board application may comprise one of a plurality of non-IP based air traffic management (ATM) applications such as described above. In other embodiments, the first on-board application may comprise one of a plurality of IP based applications such as described above. In such an embodiment, the IP based application may be characterized as being either ICM-aware or non-ICM aware. Where the IP based application is ICM-aware, one or both of the selections at blocks 410 and 420 may be at least in part based on preferences communicated by the application. Further, some embodiments of the present disclosure comprise multiple instances of method 400 being performed concurrently.

In various alternative embodiments, any of the systems or methods described throughout this disclosure may be implemented on one or more on-board avionics computer systems comprising a processor executing code to realize the modules, functions, managers, software layers and interfaces and other elements described with respect to Figures 1-4, said code stored on an on-board non-transient data storage device. Therefore other embodiments of the present disclosure include program instructions resident on computer readable media which when implemented by such on-board avionics computer systems, enable them to implement the embodiments described herein. As used herein, the term "computer readable media" refers to tangible memory storage devices having non-transient physical forms. Such non-transient physical forms may include computer memory devices, such as but not limited to punch cards, magnetic disk or tape, any optical data storage system, flash read only memory (ROM), nonvolatile ROM, programmable ROM (PROM), erasable-programmable ROM (E-PROM), random access memory (RAM), or any other form of permanent, semi-permanent, or temporary memory storage system or device having a physical, tangible form. Program instructions include, but are not limited to computer-executable instructions executed by computer system processors and hardware description languages such as Very High Speed Integrated Circuit (VHSIC) Hardware Description Language (VHDL).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims.

## Claims

1. A method (400) for providing dynamic transport protocol layer management for avionics applications, the method comprising:
selecting an air-ground communication IP datalink (140) based at least in part on criteria defined by one or more profile and policy definitions (137);
selecting a transport layer protocol (420) from between Transport Control Protocol, TCP, and User Datagram Protocol, UDP, based on the air-ground communication IP datalink (140) selected and further based on criteria defined by the one or more profile and policy definitions (137);
configuring parameters of the transport layer protocol selected on a port-by-port basis, and adapting the transport layer protocol to meet quality of service, QoS, needs of a first on-board application utilizing the air-ground communication IP datalink selected and the QoS capability of the air-ground communication IP datalink selected to provide air-ground communication services for the first on-board application, wherein the parameters of the transport layer protocol selected includes at least one of timing, reliability, packet-ordering or flow control; and
instantiating a port entity (430), wherein the port entity (430) provides transport services to transport air-ground communications between the first on-board application (110, 210) and the air-ground communication IP datalink (140) using services provided through a Socket API (150), based on the selected transport layer protocol.

2. The method (400) of claim 1, wherein the air-ground communication IP datalink (140) comprises one of a satellite communications, SATCOMM, datalink, a VHF radio datalink, a Wi-Fi datalink, a cellular communication datalink or a broadband IP-based air-ground datalink.

3. The method (400) of claim 1, wherein selecting the air-ground communication IP datalink (140) is further based on at least one of datalink availability, cost, data bandwidth, latency, timeliness, and QoS factors.

4. The method (400) of claim 1, wherein selecting the transport layer protocol (420) is based at least in part on one or both of the QoS needs of the first on-board application, and the QoS capability of the selected air-ground communication IP datalink (140).

5. The method (400) of claim 1, wherein the first on-board application (110, 210) comprises one of a plurality of non-IP based air traffic management, ATM, applications.

6. The method (400) of claim 1, wherein the first on-board application (110, 210) comprises one of a plurality of IP-based applications.

7. The method (400) of claim 1, wherein one or both of selecting an air-ground communication IP datalink (140) and selecting a transport layer protocol are based at least in part on preferences communicated by the first on-board application (110, 210).

8. A system (100, 200) for providing dynamic transport protocol layer management for avionics applications, the system comprising:
a plurality of Internet Protocol, IP, datalinks (140);
an avionics computer system comprising at least one processor (105, 205), wherein the avionics computer system (105, 205) is on-board an aircraft;
a first module (120, 220) on-board the aircraft and in communication with one or more avionics applications executing on the avionics computer system and further in communication with a Socket Application Programming Interface, API, (150), the first module (120, 220) including a first transport layer protocol manager and convergence layer (123) and a second transport layer protocol manager and convergence layer (124); and
a communications manager (130) on board the aircraft and coupled to the first module (120, 220), wherein the communications manager comprises a datalink management function (137) configured to generate a transport decision by selecting a first IP datalink from the plurality of IP datalinks (140) for transporting the air-ground communications;
wherein based on the transport decision communicated by the communications manager (130), the first module (120, 220) is configured to:
select between Transport Control Protocol, TCP, and User Datagram Protocol, UDP, further based at least in part on one or more profile and policy definitions;
instantiate a port entity (430), wherein the port entity (430) is configured to transport services to transport air-ground communications between a first on-board application of the one or more avionics applications and the first IP datalink of the plurality of IP datalinks (140) using services provided through the Socket API (150); and
configure parameters of the selected transport layer protocol on a port-by-port basis, and adapt the transport layer protocol to meet quality of service, QoS, needs of the first on-board application utilizing the air-ground communication IP datalink selected and the QoS capability of the first IP datalink to provide air-ground communication services for the first on-board application, wherein the parameters of the transport layer protocol includes at least one of timing, reliability, packet-ordering or flow control.

9. The system of claim 8, wherein the first transport layer protocol manager and convergence layer (123) comprises a Transport Control Protocol, TCP, port manager and convergence layer; and
the second transport layer protocol manager and convergence layer (124) comprises a User Datagram Protocol, UDP, port manager and convergence layer.

10. The system of claim 8, wherein the first on-board application (110, 210) comprises a non-IP based air traffic management, ATM, application.

11. The system of claim 8, wherein the first on-board application (110, 210) comprises an IP-based application.

12. The system of claim 8, wherein the transport decision communicated by the communications manager (130) is based at least in part on preferences communicated by the first on-board application (110, 210) to the communications manager (130).

13. The system of claim 8, wherein the first IP datalink comprises one of a satellite communications, SATCOMM, datalink, a VHF radio datalink, a Wi-Fi datalink, a cellular communication datalink or a broadband IP-based air-ground datalink.

14. The system of claim 8, wherein the communication manger (130) is further coupled to an IP-based Access Network Routing Function (160) on-board the aircraft, wherein the communication manager (130) is configured to send router configuration to the IP-based Access Network Routing Function (160) to route the air-ground communications messages associated with the first on-board application (110, 210) to the first IP datalink.

15. The system of claim 8, wherein the datalink management function (137) is configured to select the first IP datalink based on one or more of datalink availability, cost, data bandwidth, latency, timeliness, and QoS factors.

16. The system of claim 8, wherein the first module (120, 220) is configured to select the transport layer protocol based at least in part on one or both of the QoS needs of the first on-board application, and the QoS capability of the selected air-ground communication IP datalink.

17. The system of claim 8, the communication manager (130) further comprising an air-ground network coordination function (133) that communicates the transport decision to at least one ground based application.

## Patentansprüche

1. Verfahren (400) zum Bereitstellen eines dynamischen Transportprotokollschichtmanagements für Avionik-Anwendungen, wobei das Verfahren Folgendes umfasst:
Wählen einer Luft/Boden-Kommunikations-IP-Datenverbindung (140) mindestens teilweise auf der Grundlage von Kriterien, die durch eine oder mehrere Profil- und Strategiedefinitionen (137) definiert sind;
Wählen eines Transportschichtprotokolls (420) zwischen dem Transportsteuerungsprotokoll, TCP, und dem Anwenderdatagrammprotokoll, UPD, auf der Grundlage der gewählten Luft/Boden-Kommunikations-IP-Datenverbindung (140) und ferner auf der Grundlage von Kriterien, die durch die eine oder die mehreren Profil- und Strategiedefinitionen (137) definiert sind;
Konfigurieren von Parametern des Transportschichtprotokolls, die auf einer portweisen Grundlage gewählt werden, und Anpassen des Transportschichtprotokolls derart, dass es Dienstqualitätsanforderungen, QoS-Anforderungen, einer ersten bordinternen Anwendung erfüllt, die die gewählte Luft/Boden-Kommunikations-IP-Datenverbindung und die QoS-Fähigkeit der gewählten Luft/Boden-Kommunikations-IP-Datenverbindung verwendet, um Luft/Boden-Kommunikationsdienste für die erste bordinterne Anwendung bereitzustellen, wobei die Parameter des gewählten Transportschichtprotokolls eine Zeitplanung, eine Zuverlässigkeit, eine Paketordnung und/oder eine Durchflusssteuerung enthalten; und
Instantiieren einer Anschlusseinheit (430), wobei die Anschlusseinheit (430) Transportdienste für Luft/Boden-Kommunikationen zwischen der ersten bordinternen Anwendung (110, 210) und der Luft/Boden-Kommunikations-IP-Datenverbindung (140) unter Verwendung von Diensten, die über eine Sockel-API (150) bereitgestellt werden, auf der Grundlage des gewählten Transportschichtprotokolls bereitstellt.

2. Verfahren (400) nach Anspruch 1, wobei die Luft/Boden-Kommunikations-IP-Datenverbindung (140) eine Satellitenkommunikationsdatenverbindung, SATCOMM-Datenverbindung, eine VHF-Funkdatenverbindung, eine Wi-Fi-Datenverbindung, eine Datenverbindung für zellulare Kommunikation oder eine IP-basierte Breitband-Luft/Boden-Datenverbindung umfasst.

3. Verfahren (400) nach Anspruch 1, wobei das Wählen der Luft/Boden-Kommunikations-IP-Datenverbindung (140) ferner mindestens teilweise auf der Grundlage einer Datenverbindungsverfügbarkeit, von Kosten, einer Datenbandbreite, einer Latenz, einer Aktualität und QoS-Faktoren erfolgt.

4. Verfahren (400) nach Anspruch 1, wobei das Wählen des Transportschichtprotokolls (420) mindestens teilweise auf den QoS-Anforderungen der ersten bordinternen Anwendung und/oder der QoS-Fähigkeit der gewählten Luft/Boden-Kommunikations-IP-Datenverbindung (140) basiert.

5. Verfahren (400) nach Anspruch 1, wobei die erste bordinterne Anwendung (110, 210) mehrere nicht IP-basierte Luftverkehrsmanagementanwendungen, ATM-Anwendungen, umfasst.

6. Verfahren (400) nach Anspruch 1, wobei die erste bordinterne Anwendung (110, 210) eine von mehreren IPbasierten Anwendungen umfasst.

7. Verfahren (400) nach Anspruch 1, wobei das Wählen einer Luft/Boden-Kommunikations-IP-Datenverbindung (140) und/oder das Wählen eines Transportschichtprotokolls mindestens teilweise auf Präferenzen, die durch die erste bordinterne Anwendung (110, 210) kommuniziert werden, basieren.

8. System (100, 200) zum Bereitstellen eines dynamischen Transportprotokollschichtmanagements für Avionik-Anwendungen, wobei das System Folgendes umfasst:
mehrere Internetprotokolldatenverbindungen, IP-Datenverbindungen (140);
ein Avionik-Computersystem, das mindestens einen Prozessor (105, 205) umfasst, wobei sich das Avionik-Computersystem (105, 205) an Bord eines Luftfahrzeugs befindet;
ein erstes Modul (120, 220) an Bord des Luftfahrzeugs und in Kommunikation mit einer oder mehreren Avionik-Anwendungen, die auf dem Avionik-Computersystem ausgeführt werden, und ferner in Kommunikation mit einer Sockel-Anwendungsprogrammierschnittstelle, Sockel-API, (150), wobei das erste Modul (120, 220) eine erste Transportschichtprotokollmanager- und Konvergenzschicht (123) und eine zweite Transportschichtprotokollmanager- und Konvergenzschicht (124) enthält; und
einen Kommunikationsmanager (130) an Bord des Luftahrzeugs und an das erste Modul (120, 220) gekoppelt, wobei der Kommunikationsmanager eine Datenverbindungsmanagementfunktion (137) umfasst, die konfiguriert ist, eine Transportentscheidung durch Wählen einer ersten IP-Datenverbindung aus den mehreren IP-Datenverbindungen (140) zum Transportieren der Luft/Boden-Kommunikationen zu erzeugen; wobei
das erste Modul (120, 220) auf der Grundlage der Transportentscheidung, die durch den Kommunikationsmanager (130) kommuniziert wurde, konfiguriert ist zum
Wählen zwischen dem Transportsteuerungsprotokoll, TCP, und dem Anwenderdatagrammprotokoll, UPD, ferner mindestens teilweise auf der Grundlage einer oder mehrerer Profil- und Strategiedefinitionen;
Instantiieren einer Anschlusseinheit (430), wobei die Anschlusseinheit (430) konfiguriert ist, Dienste zum Transportieren von Luft/Boden-Kommunikationen zwischen einer ersten bordinternen Anwendung der einen oder der mehreren Avionik-Anwendungen und der ersten IP-Datenverbindung der mehreren IP-Datenverbindungen (140) unter Verwendung von Diensten, die über die Sockel-API (150) bereitgestellt werden; und
Konfigurieren von Parametern des gewählten Transportschichtprotokolls auf einer portweisen Grundlage und Anpassen des Transportschichtprotokolls derart, dass es Dienstqualitätsanforderungen, QoS-Anforderungen, der ersten bordinternen Anwendung erfüllt, die die gewählte Luft/Boden-Kommunikations-IP-Datenverbindung und die QoS-Fähigkeit der gewählten Luft/Boden-Kommunikations-IP-Datenverbindung verwendet, um Luft/Boden-Kommunikationsdienste für die erste bordinterne Anwendung bereitzustellen, wobei die Parameter des Transportschichtprotokolls eine Zeitplanung, eine Zuverlässigkeit, eine Paketordnung und/oder Durchflusssteuerung enthalten.

9. System nach Anspruch 8, wobei die erste Transportschichtprotokollmanager- und Konvergenzschicht (123) eine Transportsteuerungsprotokollanschlussmanager- und Konvergenzschicht, TCP-Anschlussmanager- und Konvergenzschicht, umfasst; und
die zweite Transportschichtprotokollmanager- und Konvergenzschicht (124) eine Anwenderdatagrammprotokollanschlussmanager- und Konvergenzschicht, UDP-Anschlussmanager- und Konvergenzschicht, umfasst.

10. System nach Anspruch 8, wobei die erste bordinterne Anwendung (110, 210) eine nicht IP-basierte Luftverkehrsmanagementanwendung, ATM-Anwendung, umfasst.

11. System nach Anspruch 8, wobei die erste bordinterne Anwendung (110, 210) eine IP-basierte Anwendung umfasst.

12. System nach Anspruch 8, wobei die Transportentscheidung, die durch den Kommunikationsmanager (130) kommuniziert wird, mindestens teilweise auf Präferenzen, die durch die erste bordinterne Anwendung (110, 210) zum Kommunikationsmanager (130) kommuniziert werden, basiert.

13. System nach Anspruch 8, wobei die IP-Datenverbindung eine Satellitenkommunikationsdatenverbindung, SATCOMM-Datenverbindung, eine VHF-Funkdatenverbindung, eine Wi-Fi-Datenverbindung, eine Datenverbindung für zellulare Kommunikation oder eine breitbandige IP-basierte Luft/Boden-Datenverbindung umfasst.

14. System nach Anspruch 8, wobei der Kommunikationsmanager (130) ferner an eine IP-basierte Zugangsnetzleitfunktion (160) an Bord des Luftfahrzeugs gekoppelt ist, wobei der Kommunikationsmanager (130) konfiguriert ist, eine Router-Konfiguration zur IP-basierte Zugangsnetzleitfunktion (160) zu senden, um die Luft/Boden-Kommunikationsnachrichten, die der ersten bordinternen Anwendung (110, 210) zugeordnet sind, zur ersten IP-Datenverbindung zu leiten.

15. System nach Anspruch 8, wobei die Datenverbindungsmanagementfunktion (137) konfiguriert ist, die erste IP-Datenverbindung auf der Grundlage einer Verfügbarkeit, von Kosten, einer Datenbandbreite, einer Latenz, einer Aktualität und/oder QoS-Faktoren einer Datenverbindung erfolgt.

16. System nach Anspruch 8, wobei das erste Modul (120, 220) konfiguriert ist, das Transportschichtprotokoll mindestens teilweise auf den QoS-Anforderungen der ersten bordinternen Anwendung und/oder der QoS-Fähigkeit der gewählten Luft/Boden-Kommunikations-IP-Datenverbindung (140) zu wählen.

17. System nach Anspruch 8, wobei der Kommunikationsmanager (130) ferner eine Luft/Boden-Netzkoordinationsfunktion (133) umfasst, die die Transportentscheidung zu mindestens einer bodenbasierten Anwendung kommuniziert.

## Revendications

1. Procédé (400) destiné à assurer une gestion dynamique de couche de protocole de transport pour des applications d'avionique, le procédé comportant les étapes consistant à :
sélectionner une liaison (140) de données IP de communication air-sol en se basant au moins en partie sur des critères définis par une ou plusieurs définitions (137) de profils et de politiques ;
sélectionner un protocole (420) de couche de transport entre un Protocole de commande de transport, TCP, et un Protocole de datagramme d'utilisateur, UDP, d'après la liaison (140) de données IP de communication air-sol sélectionnée et également d'après des critères définis par la ou les définitions (137) de profils et de politiques ;
configurer des paramètres du protocole de couche de transport sélectionné port par port, et adapter le protocole de couche de transport pour répondre à des besoins de qualité de service, QoS, d'une première application embarquée utilisant la liaison de données IP de communication air-sol sélectionnée et la capacité de QoS de la liaison de données IP de communication air-sol sélectionnée pour fournir des services de communication air-sol à la première application embarquée, les paramètres du protocole de couche de transport sélectionné comprenant au moins un paramètre parmi le rythme, la fiabilité, l'ordonnancement de paquets et la commande de flux ; et
instancier une entité (430) de port, l'entité (430) de port fournissant des services de transport pour transporter des communications air-sol entre la première application embarquée (110, 210) et la liaison (140) de données IP de communication air-sol en utilisant des services fournis par l'intermédiaire d'une API (150) de connecteur, d'après le protocole de couche de transport sélectionné.

2. Procédé (400) selon la revendication 1, la liaison (140) de données IP de communication air-sol comportant une liaison parmi une liaison de données avec communication par satellite, SATCOMM, une liaison de données par radio VHF, une liaison de données par Wi-Fi, une liaison de données par communication cellulaire et une liaison de données air-sol basée sur IP à large bande.

3. Procédé (400) selon la revendication 1, la sélection de la liaison (140) de données IP de communication air-sol étant en outre basée sur au moins un aspect parmi la disponibilité de la liaison de données, le coût, la bande passante de données, la latence, l'opportunité, et des facteurs de QoS.

4. Procédé (400) selon la revendication 1, la sélection du protocole (420) de couche de transport étant basée au moins en partie sur les besoins de QoS de la première application embarquée et/ou sur la capacité de QoS de la liaison (140) de données IP de communication air-sol sélectionnée.

5. Procédé (400) selon la revendication 1, la première application embarquée (110, 210) comportant une application parmi une pluralité d'applications de gestion du trafic aérien, ATM, non basées sur IP.

6. Procédé (400) selon la revendication 1, la première application embarquée (110, 210) comportant une application parmi une pluralité d'applications basées sur IP.

7. Procédé (400) selon la revendication 1, la sélection d'une liaison (140) de données IP de communication air-sol et/ou la sélection d'un protocole de couche de transport étant basées au moins en partie sur des préférences communiquées par la première application embarquée (110, 210).

8. Système (100, 200) destiné à assurer une gestion dynamique de couche de protocole de transport pour des applications d'avionique, le système comportant :
une pluralité de liaisons (140) de données sous Protocole Internet, IP ;
un système informatique d'avionique comportant au moins un processeur (105, 205), le système informatique d'avionique (105, 205) se trouvant à bord d'un aéronef ;
un premier module (120, 220) à bord de l'aéronef et en communication avec une ou plusieurs applications d'avionique s'exécutant sur le système informatique d'avionique et également en communication avec une Interface de programmation d'applications, API, (150) de connecteur, le premier module (120, 220) comprenant une première couche (123) de gestionnaire de protocole de couche de transport et de convergence et une deuxième couche (124) de gestionnaire de protocole de couche de transport et de convergence ; et
un gestionnaire (130) de communications à bord de l'aéronef et couplé au premier module (120, 220), le gestionnaire de communications comportant une fonction (137) de gestion de liaisons de données configurée pour générer une décision de transport en sélectionnant une première liaison de données IP parmi la pluralité de liaisons (140) de données IP pour transporter les communications air-sol ;
le premier module (120, 220) étant configuré, d'après la décision de transport communiquée par le gestionnaire (130) de communications, pour :
choisir entre un Protocole de commande de transport, TCP, et un Protocole de datagramme d'utilisateur, UDP, en se basant également au moins en partie sur une ou plusieurs définitions de profils et de politiques ;
instancier une entité (430) de port, l'entité (430) de port étant configurée pour des services de transport destinés à transporter des communications air-sol entre une première application embarquée de l'application ou les applications d'avionique et la première liaison de données IP de la pluralité de liaisons (140) de données IP en utilisant des services fournis par l'intermédiaire de l'API (150) de connecteur ; et
configurer des paramètres du protocole de couche de transport sélectionné port par port, et adapter le protocole de couche de transport pour répondre à des besoins de qualité de service, QoS, de la première application embarquée utilisant la liaison de données IP de communication air-sol sélectionnée et la capacité de QoS de la première liaison de données IP pour fournir des services de communication air-sol à la première application embarquée, les paramètres du protocole de couche de transport comprenant au moins un paramètre parmi le rythme, la fiabilité, l'ordonnancement de paquets et la commande de flux.

9. Système selon la revendication 8, la première couche (123) de gestionnaire de protocole de couche de transport et de convergence comportant une couche de gestionnaire de port et de convergence de Protocole de commande de transport, TCP ; et
la deuxième couche (124) de gestionnaire de protocole de couche de transport et de convergence comportant une couche de gestionnaire de port et de convergence de Protocole de datagramme d'utilisateur, UDP.

10. Système selon la revendication 8, la première application embarquée (110, 210) comportant une application de gestion du trafic aérien, ATM, non basée sur IP.

11. Système selon la revendication 8, la première application embarquée (110, 210) comportant une application basée sur IP.

12. Système selon la revendication 8, la décision de transport communiquée par le gestionnaire (130) de communications étant basée au moins en partie sur des préférences communiquées par la première application embarquée (110, 210) au gestionnaire (130) de communications.

13. Système selon la revendication 8, la première liaison de données IP comportant une liaison parmi une liaison de données avec communication par satellite, SATCOMM, une liaison de données par radio VHF, une liaison de données par Wi-Fi, une liaison de données par communication cellulaire et une liaison de données air-sol basée sur IP à large bande.

14. Système selon la revendication 8, le gestionnaire (130) de communications étant en outre couplé à une Fonction (160) de routage de réseau d'accès basée sur IP à bord de l'aéronef, le gestionnaire (130) de communications étant configuré pour envoyer une configuration de routeur à la Fonction (160) de routage de réseau d'accès basée sur IP pour acheminer les messages de communications air-sol associés à la première application embarquée (110, 210) vers la première liaison de données IP.

15. Système selon la revendication 8, la fonction (137) de gestion de liaisons de données étant configurée pour sélectionner la première liaison de données IP d'après un ou plusieurs aspects parmi la disponibilité de la liaison de données, le coût, la bande passante de données, la latence, l'opportunité, et des facteurs de QoS.

16. Système selon la revendication 8, le premier module (120, 220) étant configuré pour sélectionner le protocole de couche de transport en se basant au moins en partie sur les besoins de QoS de la première application embarquée et/ou sur la capacité de QoS de la liaison de données IP de communication air-sol sélectionnée.

17. Système selon la revendication 8, le gestionnaire (130) de communications comportant en outre une fonction (133) de coordination de réseaux air-sol qui communique la décision de transport à au moins une application basée au sol.
